# EUROPÄISCHE PATENTSCHRIFT

(11) **EP 0 666 197 B1**
(45) Veröffentlichungstag und Bekanntmachung des Hinweises auf die Patenterteilung: **29.12.1999**
(21) Anmeldenummer: 95200265.7
(22) Anmeldetag: 03.02.1995
(51) Int. Cl.: B60R 9/00, B60D 1/60, B60R 9/06, B60R 9/10

(54) **Fahrradträger mit einer Kupplungseinrichtung zur Anordnung an einem Zughaken eines Kraftfahrzeuges**
Bicycle carrier with a coupling device for attachment to a vehicle-hitch
Porte-bicyclette avec un moyen de verrouillage destiné à être fixé au crochet d'attelage d'un véhicule

(30) Priorität: 04.02.1994 DE 9401820 U; 24.11.1994 DE 4441832
(43) Veröffentlichungstag der Anmeldung: 09.08.1995
(73) Patentinhaber: SPINDER PRODUCTS B.V., NL-9206 AG Drachten (NL)
(72) Erfinder: Kuipers, Henk, NL-9281 NT Harkema (NL)
(74) Vertreter: Merkelbach, B.

(56) Entgegenhaltungen:
- EP-A- 0 447 338
- EP-A- 0 539 999
- DE-U- 9 307 886
- DE-U- 9 311 905
- DE-U- 9 314 205
- GB-A- 2 125 747
- GB-A- 2 197 273
- NL-A- 8 100 211
- US-A- 3 805 984
- US-A- 4 823 997

## Beschreibung

Die Erfindung betrifft einen Fahrradträger mit einer Kupplungseinrichtung zur Anordnung an einem Zughaken (Anhängerkupplung) eines Kraftfahrzeuges, der einen in Richtung der Fahrzeuglängsachse verlaufenden Mittelträger und quer zu diesem, je nach Zahl der zu tragenden Fahrräder, paarweise beidseitig abragende, vorzugsweise längenveränderbare, quertragerbildendende Querträgerarme, diejeweils eine Aufnahme fur ein Rad des zu tragenden Fahrrades aufweisen, umfaßt, wobei der Mittelträger zwischen zwei Querträgern einen Führungsschacht für eine lotrecht aufragende, höhen- und/oder längenveränderbare Tragsäule aufweist, die Halterungsorgane für Pedalarme der auf den Querträgern getragenen Fahrräder aufweist.

Derartige Fahrradträger müssen beispielsweise in Deutschland vom technischen Überwachungsverein überprüft werden. Für eine erfolgreiche Prüfung ist es notwendig, daß sowohl die Fahrräder auf dem Fahrradträger ausreichend sicher zu befestigen sind, als auch der Fahrradträger selbst ausreichend sicher am Zughaken der Anhängerkupplung des Kraftfahrzeuges befestigt werden kann. Eine Problematik besteht dabei darin, daß der gesamte Fahrradträger auf einer weitgehend etwa kugelförmig ausgebildeten Endverdickung des Zughakens aufgesetzt werden muß, daß aber verhindert werden muß, daß der Fahrradträger sich um diese Endverdickung wie die Gelenkpfanne eines Kugelgelenkes dreht, weil sonst die getragenen Fahrräder verkehrsgefährdende Positionen einnehmen könnten und durch dabei wirkende Gewichtskräfte vielleicht sogar sich ganz oder teilweise vom Fahrradträger lösen könnten.

Diesen Forderungen werden die auf dem Markt befindlichen Fahrradträger der genannten Gattung mehr oder weniger gerecht.

Aus dem Deutschen Gebrauchsmuster DE-U-9314205 ist ein ähnlichen Fahrradträger bekannt.

Der Erfindung liegt die Aufgabe zugrunde, einen Fahrradträger der eingangs genannten Gattung so weiterzubilden, daß die Fahrräder auf dem Fahrradträger und der Fahrradträger am Zughaken möglichst einfach und effektiv gesichert werden können.

Die Lösung dieser gestellten Aufgabe sieht erfindungsgemäB vor daß der Mittelträger im wesentlichen aus Blechen bzw. Platten gefertigt ist, von denen ein erstes Blech die Oberseite und ein zweites Blech, zumindest im Bereich des Führungsschacht, einen Bodenbereich des Mittelträgers bildet, wobei die Oberseite und der Bodenbereich miteinander korrespondierende Öffnungen zur Bildung des Führungsschachtes für die Tragsäule aufweisen und daß die Halterungsorgane der Tragsäule in Fahrzeuglängsrichtung versetzt zueinander, beidseitig der Längsrichtung des Fahrzeuges an der Tragsäule angeordnet und axialsymmetrisch zur Tragsäule ausgebildet sind und daß einem Ende des Mittelträger einen Aufnahmebereich für eine Kupplungseinrichtung aufweist in der die kugelförmige Endverdickung eines Zughakens des Kraftfahrzeuges durch Verklemmung mittels Klemorganen und mit dem Mittelträger zusammenwirkende Spannschraube der Kupplungseinrichtung gesichert werden kann.

Mit diesen erfindungsgemäßen Merkmalen wird eine besonders sichere Anbringung des Fahrradträgers am Zughaken, insbesondere an der Endverdickung des Zughakens, erreicht, wird eine Klemmeinrichtung an einem kugelförmigen Gegenstand verklemmt, kommt es in den meisten Fällen lediglich zu punktförmigen Anlagen, so daß unter Umständen eine relativ labile Klemmverbindung entsteht, die bei auftretenden Kräften sich zwar nicht unbedingt löst, aber zumindest ihre Position an der Kugel verändern könnte, was im vorliegenden Falle zu einer unliebsamen und gefährlichen Verdrehung des Fahrradträgers am Zughaken führen könnte.

Erfindungsgemäß wird die Klemmeinrichtung jedoch wenigstens in einem Bereich mit einer konusförmigen Wandung versehen, so daß sich unweigerlich eine kreisförmige bzw. ringförmige Anlagelinie an der kugelförmigen Endverdickung bildet und außerdem automatisch eine Zentrierung der Kugel im Konus bzw. des Konus auf der Kugel erfolgt, so daß der Fahrradträger zwangsläufig und sicher die gewünschte waagerechte Position am Kraftfahrzeug einnimmt und beibehält.

Die Spanneinrichtung zum Spannen der Klemmeinrichtung umfaßt vorzugsweise eine einfache Spannschraube mit der die Haube bzw. der Becher bewegt wird.

Das Untergreiforgan kann zum Umfassen des Halsabschnittes und Untergreifen der Endverdickung beispielsweise im wesentlichen gabelförmig ausgebildet sein, wodurch eine weitere Zentrierung und Ausrichtung des Fahrradträgers erfolgt. Vorzugsweise ist aber das Untergreiforgan als Schieber ausgebildet, und zwar mit einer im wesentlichen etwa schlüssellochförmigen Durchtrittöffnung, so daß zunächst einmal durch den erweiterten Bereich die Endverdickung in den Aufnahmebereich der Kupplungseinrichtung eingeführt werden kann und danach der Schieber verschoben werden kann, so daß der relativ schmalere, eher schlitzförmige Bereich der Schlüssellochform den Halsabschnitt gabelartig umgreift und die Endverdickung untergreift und gegen ein Wiederaustreten aus dem Aufnahmebereich sichert.

Eine Weiterbildung der Erfindung sieht vor, daß die Wandung des Bechers bzw. der Haube unterhalb des konischen Wandabschnittes zylindrisch nach unten in Richtung auf den Schieber verlängert ist. Dadurch kann sich mit Vorteil beim Verklemmen der Endverdickung zwischen dem Becher bzw. der Haube und dem Schieber eine Anlage des Schiebers am unteren Rand der Verlängerung des zylindrischen Wandabschnittes ergeben. Durch die Druckbeaufschlagung der Endverdickung über die Haube und deren Spanneinrichtung kommt es dann zu Verformungen des Schiebers, durch die die Klemmwirkung mit Vorteil noch vergrößert wird und durch die die Positionierung des Fahrradträgers an der Endverdickung noch gesichert wird.

Für den Schieber können in räumlich kompakter Weise Wegbegrenzungen durch Anschlagzapfen vorgesehen sein. Außerdem kann vorgesehen sein, daß der Schieber in seiner verriegelnden Position durch ein Schloß gesichert wird, um auf diese Weise noch besonders einfach den Fahrradträger gegen Diebstahl zu sichern.

Die Haube bzw. der Becher zum Aufsetzen auf die Endverdickung des Zughakens muß nicht unbedingt fest im Aufnahmebereich für die Endverdickung angeordnet sein, sondern es kann beispielsweise auch über eine Zentrierfeder eine Zentrierung dieser Haube erfolgen, wodurch sich unter Federkraft die richtige Position des Fahrradträgers am Zughaken ergibt, die dann durch die Betätigung der Spanneinrichtung mit der Klemmeinrichtung fixiert wird.

Auch der konische Wandbereich der Haube bzw. des Bechers kann relativ verformbar sein, um dadurch die Klemmwirkung im Anlagebereich zwischen der Endverdickung und der konischen Wandung noch zu vergrößern.

Bei auf dem Markt befindlichen Fahrradträgern der im vorhergehenden näher spezifizierten Gattung ist der Mittelträger ein Stahlrohr mit einem beispielsweise rechteckigen Querschnitt, welches bei montiertem Fahrradträger waagerecht in Längsrichtung des Kraftfahrzeuges ausgerichtet ist. Senkrecht dazu ist in diesem Mittelträger, die Längsachse des Mittelträgers schneidend, ein Führungsschacht angeordnet, in den eine lotrecht aufragende Tragsäule eingeschoben werden kann. Auch dieser Führungsschacht kann ein Rohr mit beispielsweise quadratischem Querschnitt sein, welches in dem Mittelträgerrohr verschweißt ist. Durch eine solche Ausbildung wird der Fahrradträger der bekannten Art erstens relativ schwer und zweitens relativ kostenaufwendig. Unter Zugrundelegung der bereits eingangs gestellten Aufgabe, einen Fahrradträger möglichst einfacher, aber mindestens genauso sicher auszubilden, sind die Vorteile der vorgeschlagenen erfindungsgemäßen Lösung erkennbar.

Der erfindungsgemäße Mittelträger besteht beispielsweise nur aus zwei Blechen, die durch entsprechende Abkantungen wenigstens und vielleicht nur im Bereich des Führungsschachtes zu einer Art Rohr mit rechteckigem Querschnitt miteinander verbunden werden, wodurch durch die Zusammenfügung der beiden Bleche und die vorhandenen Abkantungen durchaus ein ausreichend steifer und fester Mittelträger entsteht. Der Führungsschacht wird dabei gleich mitausgeformt, indem die Bleche eingeschnitten werden, wodurch die Kontur der Führungsschachtöffnung im jeweiligen Blech vorgezeichnet wird, und indem die durch diese Schnittlinie begrenzte Zunge einwärts abgekantet wird und damit dann gleich unter Freigabe der Öffnung des Führungsschachtes eine Seitenwandung des Führungsschachtes bildet. Oberseitenblech und Bodenblech zusammen können auf diese Weise zwei Zungen bereitstellen, die zwei Seitenwandungen als Führungsflächen für die lotrechte Tragsäule bilden. Zwei derartige, einander gegenüberstehende Führungsflächen reichen aber zu einer sicheren Führung ohne weiteres aus. Natürlich kann die Zunge des einen Blechteiles zur besseren Versteifung mit ihrem freien Rand mit dem anderen Blechteil verbunden, z.B. verschweißt, werden.

Der Mittelträger des erfindungsgemäßen Fahrradträgers ist somit sehr kostengünstig mit wenig Materialaufwand maschinell herstellbar, ohne das diese Vereinfachung und Kostengünstigkeit zu Lasten der Sicherheit ginge.

Zur weiteren Stabilisierung ist nach einer Weiterbildung vorgesehen, daß sich der Mittelträger in seiner Draufsicht verjüngt, vorzugsweise trapezförmig ausgebildet ist.

In gewohnter Weise kann auch bei der erfindungsgemäßen Ausbildung der Mittelträger an seinem freien Ende eine Anbringungsmöglichkeit für einen, vorzugsweise mit Leuchten bestückbaren Kennzeichenschildträger aufweisen.

Eine andere vorteilhafte Ausfürung der Erfindung ist dadurch gekkzeichnet daß die Halterungsorgane der Tragsäule in Fahrzeuglängsrichtung veretzt zueinander, beidseitig der Längsrichtung des des Fahrzeuges an der Tragsäule angeordnet und axialsymmetrisch zur Tragsäule ausgebildet sind, indem zwei Klammerteile in der von Wäscheklammern gewohnten Form, jeweils ein breiteres Klammerfunktionsende und ein sich in Gegenrichtung dazu verjüngendes Schwanzende aufweisend, derart miteinander verbunden sind, daß sie mit ihren Klammerinnenflächen flächig aneinander anliegen und dem Schwanzende des einen Klammerteiles jeweils das Klammerfunktionsende des anderen Klammerteiles funktionell zugeordnet ist.

Durch die erfindungsgemäße Ausbildung der Klammerteile mit einem breiteren Klammerfunktionsende bzw. Kopfende und einem sich verjüngenden Schwanzende kommt es bei einer flächigen Anlage der beiden Teile, bei der jeweils ein Kopfende einem Schwanzende zugeordnet ist, automatisch zu dem gewünschten Versatz der beiden Klammerfunktionsenden in Längsrichtung des Kraftfahrzeuges gesehen. Dieser Versatz ist deshalb notwenig, weil die Fahrräder auf dem Fahrradträger, nämlich den aus Querträgerarmen gebildeten Querträgern, quer zur Fahrzeuglängsrichtung, in Fahrzeuglängsrichtung gesehen hintereinander angeordnet sind und das Klammerfunktionsende des einen Klammerteiles beispielsweise den Pedalarm des vorderen Fahrrades und das andere Klammerteil den Pedalarm des hinteren Fahrrades erfassen soll.

Durch die günstige Ausbildung der beiden Klammerteile kommt es aber nicht nur automatisch zu dem gewünschten Versatz, sondern auch zu einem günstigen funktionalen Zusammenwirken des Klammerfunktionsendes des einen Klammerteiles und des zugeordneten Schwanzteiles des anderen Klammerteiles. Beide zusammen bilden nämlich Klemmbacken, wobei das Klammerfunktionsende jeden Klammerteils vorzugsweise etwa maulförmig ausgebildet ist, so daß es den Pedalarm eines Fahrrades umgreifen kann. Diese Maulform wird durch das Schwanzende des zugeordneten anderen Klammerteiles geschlossen. Eine zusätzliche Verklemmung kann, wie dies eine Weiterentwicklung vorsieht, z.B. mit Hilfe einer Spanneinrichtung, vorzugsweise einer Spannschraube, geschehen.

Die Klammerteile können ebenfalls relativ kosten- und materialgünstig als Hohlteile ausgebildet werden, z.B. als Aluminiumgußteile oder Kunststoffgußteile, wobei ohne weiteres Stege als Verstärkungen der Form vorgesehen und angeformt werden können. Auch der das jeweilige Klammerteil tragende Teil der Tragsäule kann an dem Klammerteil gleich mit angeformt werden, so daß die Tragsäule selbst entsprechend der Trennebenen der Klammerteile in zwei Teile getrennt ist. Da beide Teile zusammen in den Führungsschacht eingeführt und dort ebenfalls irgendwie arretiert werden, entsteht eine verbundene Tragsäule, die genauso stabil ist, wie eine einstückige Tragsäule.

Wenn die Klammerteile aus Metall ausgebildet sind, können die Klammerfunktionsenden oder auch die Schwanzenden mit einem weichen Material kaschiert werden, damit die Pedalarme der gehaltenen Fahrräder nicht verkratzt werden.

Zusätzlich wird das Fahrrad auf dem Fahrradträger, wie im vorhergehenden nur kurz angedeutet, dadurch gehalten, daß die beiden Räder des Fahrrades in Aufnahmen eingeführt werden, die an den Querträgerarmen, z.B. an deren freien Enden, befestigt sind. Diese Aufnahmen können gebogene Stücke eines U-Profils sein, die den Mantel eines Rades des Fahrrades umgreifen. Befestigt werden kann das Rad an dieser Aufnahme beispielsweise mit Hilfe eines Riemens, der zwischen den Speichen über die Innenseite der Felge des Rades geführt wird und die offene Seite des U-Profiles schließt. Derartige Halterungen sind aber von auf dem Markt befindlichen Fahrradträgern durchaus bekannt.

Ausführungsbeispiele, aus denen sich weitere erfinderische Merkmale ergeben, sind in den Zeichnungen dargestellt. Es zeigen:
- Fig. 1: eine schematische Seitenansicht eines Fahrrades auf einem erfindungsgemäßen Fahrradträger,
- Fig. 2: eine Explosionsdarstellung eines erfindungsgemäßen Fahrradträgers,
- Fig. 3: eine Perspektivansicht eines Mittelträgers mit Querträgerarmen eines erfindungsgemäßen Fahrradträgers,
- Fig. 4: einen demontierten Mittelträger gemäß Fig. 3,
- Fig. 5: einen Schnitt durch den Aufnahmebereich eines erfindungsgemäßen Fahrradträgers für eine Endverdickung eines Zughakens,
- Fig. 6: eine Draufsicht auf einen Schieber aus einem Aufnahmebereich gemäß Fig. 5 und
- Fig. 7: eine schematische Perspektivansicht eines Aufnahmebereiches gemäß Fig. 5.

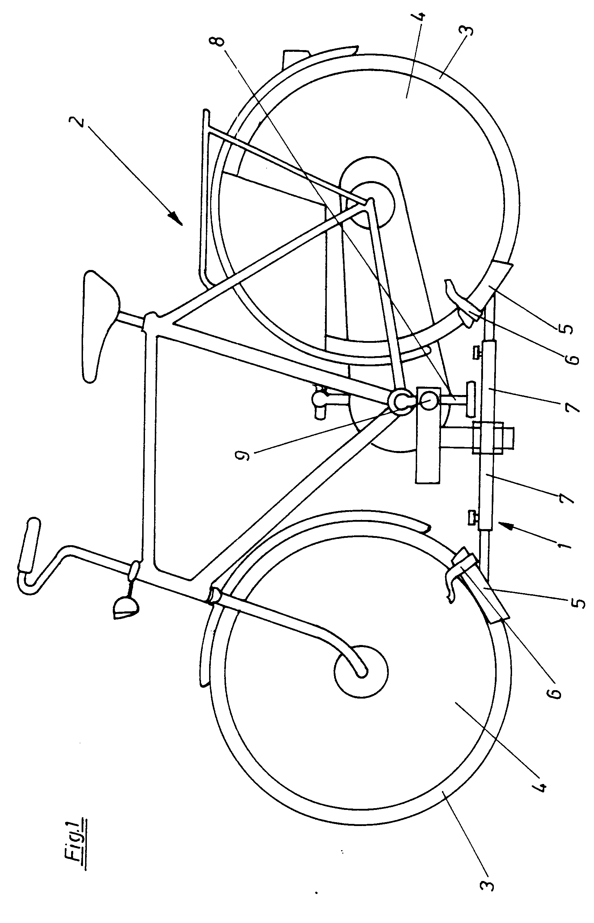

Die Fig. 1 zeigt ein auf einem Fahrradträger 1 angeordnetes Fahrrad 2. Beim Betrachten der Fig. 1 schaut der Betrachter in Richtung der Längsachse eines nicht dargestellten Kraftfahrzeuges, an dessen Heck der Fahrradträger 1 in der gezeigten Weise angeordnet sein könnte, so daß das Fahrrad 2 quer zur Fahrtrichtung hinter dem Fahrzeug angeordnet ist. In der Regel wird ein Doppelträger verwendet, bei dem zwei Fahrräder 2 hintereinander angeordnet sein können.

Die Mäntel 3 der Räder 4 des Fahrrades 2 werden von U-profilförmigen Aufnahmen 5 gehalten, an denen sie mittels Riemen 6 angeschnallt sind. Die Aufnahmen 5 sind an Querträgerarmen 7 angeordnet, die längenveränderbar, und damit an verschiedene Fahrradgrößen anpaßbar sind.

Zusätzlich wird ein Pedalarm 8 des Fahrrades 2 durch Klammerteile 9 gehalten.

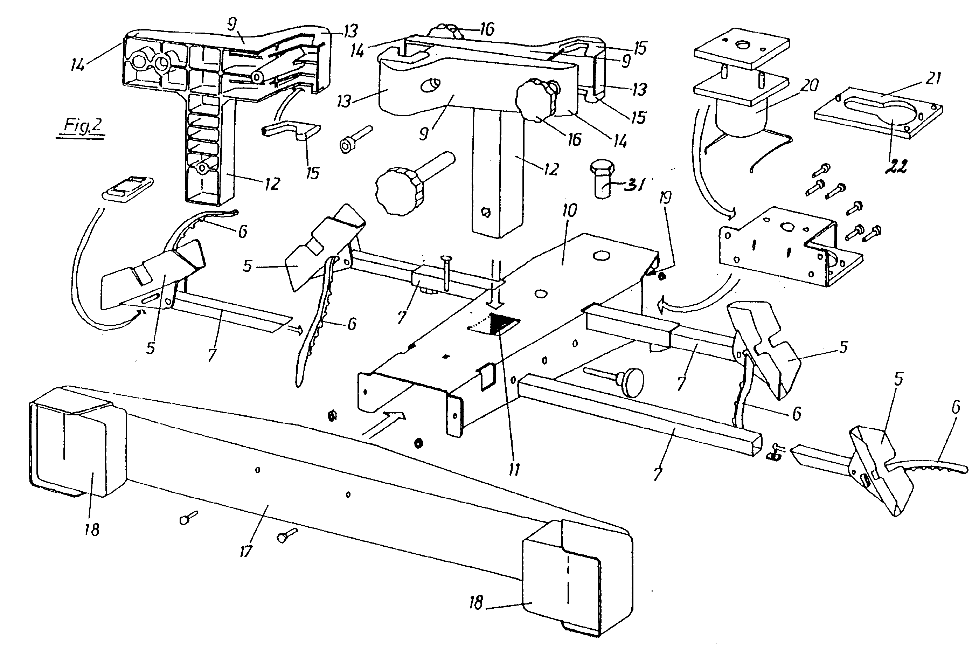

Fig. 2 zeigt eine Explosionsdarstellung eines erfindungsgemäßen Fahrradträgers gemäß Fig. 1. Gleiche Bauelemente sind mit den gleichen Bezugszahlen bezeichnet wie in Fig. 1.

In der Fig. 2 ist erkennbar, daß die Querträgerarme 7 an einem weitgehend kastenförmigen Mittelträger 10 angeordnet sind. Dieser Mittelträger 10 weist einen Führungsschacht 11 auf, in den lotrecht eine Tragsäule 12 einschiebbar ist, an deren oberem Ende ein Paar von Klammerteilen 9 angeordnet ist. In der linken oberen Ecke der Fig. 2 ist erkennbar, daß ein zusätzlich vereinzelt gezeichnetes Klammerteil 9 hohl als Gußteil mit Verstärkungsstegen ausgebildet ist, wobei an das Klammerteil 9 eine Hälfte der Tragsäule 12 angeformt ist.

Jedes Klammerteil weist ein relativ breit und maulförmig ausgebildetes Klammerfunktionsende 13 und ein sich verjüngendes Schwanzende 14 auf. Die scharfen Kanten des Klammerfunktionsendes können mit Kunststoffteilen 15 kaschiert werden. An der Tragsäule 12 sind die Klammerteile 9 so angeordnet und einander zugeordnet, daß sie flächig aneinander anliegen und jeweils dem Klammerfunktionsende 13 eines Klammerteiles 9 das Schwanzende 14 des anderen Klammerteiles 9 zugeordnet ist. An den Schwanzenden 14 sind Spannschrauben 16 angeordnet, mit denen ein Pedalarm 8, der von einem Klammerfunktionsende 13 umgriffen wird, in diesem Klammerfunktionsende 13 verklemmt werden kann. Durch die Formgebung und die Anordnung der Klammerteile 9 sind die beiden Klammerfunktionsenden 13 zueinander in Längsrichtung des Fahrzeuges gesehen zueinander versetzt angeordnet, so daß das eine Klammerfunktionsende 13 dem auf dem einen aus Querträgerarmen 7 gebildeten Querträger näher ist, während das andere Klammerfunktionsende dem anderen Querträger näher ist, so daß die jeweils auf den Querträgern angeordneten Fahrräder an jeweils einem Pedalarm 8 erfaßt werden können.

An dem freien Ende des Mittelträgers 10 ist ein Kennzeichenschildträger 17, der auch Beleuchtungen 18 aufweist, angeordnet.

An dem anderen Ende weist der Mittelträger 10 einen Aufnahmebereich 19 für eine Kupplungseinrichtung auf, mit der er mit dem Zughaken, insbesondere der Endverdickung eines Zughakens, einer Anhängerkupplung eines Kraftfahrzeuges verkuppelt werden kann. Die zugehörige Kupplungseinrichtung weist insbesondere einen Becher 20 auf, in den die Endverdickung des Zughakens von unten eingeführt werden kann bzw. mit dem der Fahrradträger auf die Endverdickung aufgesetzt werden kann, und einen Schieber 21 mit einer etwa schlüssellochförmigen Durchtrittsöffnung 22. Durch den breiteren Teil der schlüssellochförmigen Durchtrittsöffnung 22 kann die Endverdickung in den Becher 20 einragen. Danach kann der Schieber so verschoben werden, daß der engere Teil der Durchtrittsöffnung 22 die Endverdickung gabelartig untergreift und den relativ dünneren Halsabschnitt unter der Endverdickung umschließt.

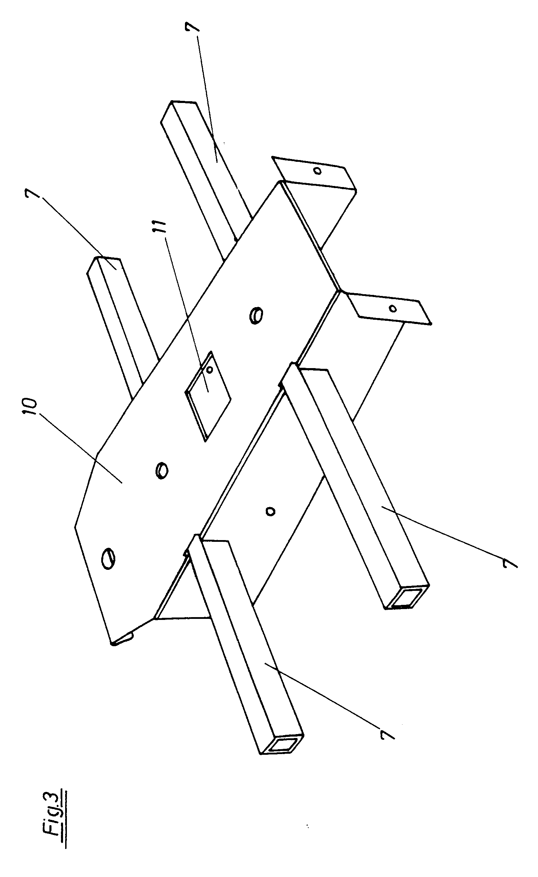

Die Fig. 3 zeigt in einer perspektivischen Ansicht noch einmal den Mittelträger 10 mit Teilen der Querträgerarme 7 und dem Führungsschacht 11 aus der Fig. 2.

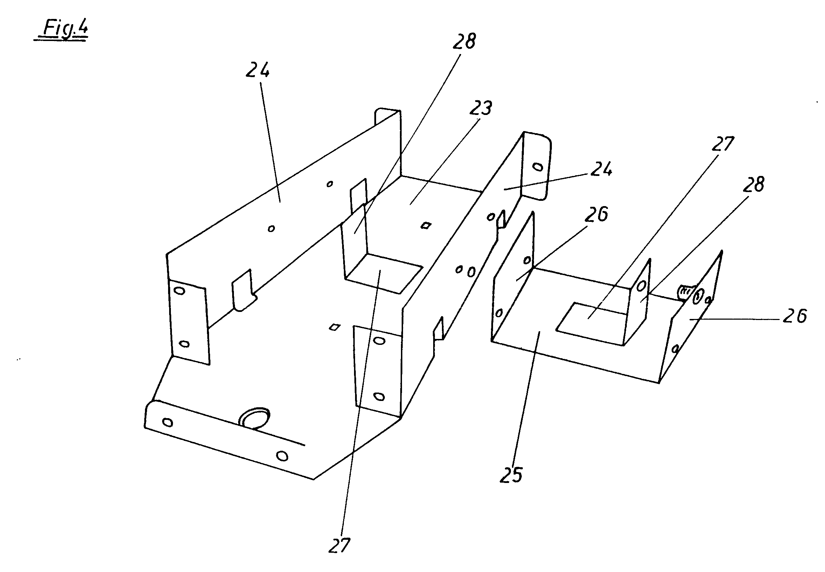

Aus der Fig. 4 ist erkennbar, daß der Mittelträger 10 der Fig. 3 in zwei Blechteile zerlegt werden kann, von denen das erste Blechteil die Oberseite 23 und die Längsseitenflächen 24 des Mittelträgers 10 bildet, während das zweite Blechteil im Bereich des Führungsschachtes 11 einen Bodenbereich 25 und Seitenlaschen 26 bildet. In jedem der beiden Blechteile ist eine Öffnung 27 als Öffnung für den Führungsschacht 11 angeordnet. Dazu ist ein Teil des Blechmaterials als Zunge 28 einwärts in den Mittelträger 10 abgekantet. Bei zusammengesetztem Mittelträger 10 bilden diese beiden einander gegenüberliegenden Zungen 28 zwei Seitenflächen des Führungsschachtes 11.

Die Fig. 5 zeigt einen Schnitt durch eine Kupplungseinrichtung, die in einem Mittelträger 10 untergebracht werden könnte. Sie weist wiederum im wesentlichen einen Becher 20 auf, der über eine Endverdickung 29 eines Zughakens 30 gestülpt ist, und einen Schieber 21.

In der Fig. 5 ist insbesondere erkennbar, daß die Innenwandung des Bechers 20 in einem Wandbereich konisch ausgebildet ist, so daß sich eine ringförmige Anlagefläche an der weitgehend kugelförmig ausgebildeten Endverdickung 29 beim Spannen der aus Becher 20 und Schieber 21 gebildeten Klemmeinrichtung ergibt. Gespannt wird diese Klemmeinrichtung mit einer Spannschraube 31. Die Spannschraube 31 könnte auch unmittelbar auf die Endverdickung 29 einwirken, wodurch sich allerdings nur eine mehr punktförmige Anlagefläche an der Endverdickung 29 ergäbe.

Unterhalb des konischen Wandbereiches ist der Becher 20 in zylindrischer Form bis zum Schieber 21 fortgesetzt. Beim Spannen der Klemmeinrichtung mit der Spannschraube 31 ergeben sich dadurch unter Umständen günstige Verformungen des Schiebers 21 und der konischen Wandung des Bechers 20, wodurch durch innere Spannungskräfte des Materials die Klemmwirkung verbessert wird.

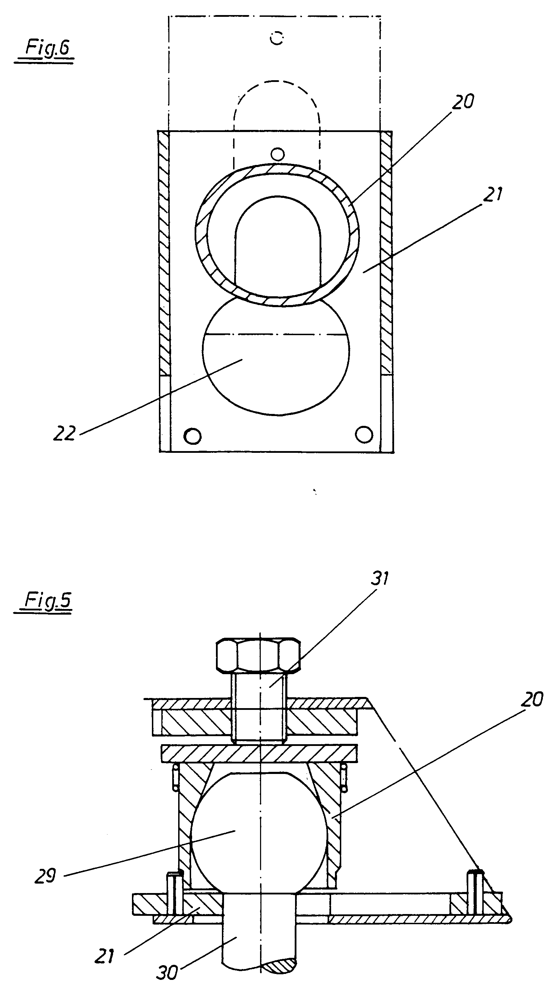

In der Fig. 6 ist einmal eine Draufsicht auf den Schieber 21 und die schlüssellochförmige Durchtrittsöffnung 22 gezeigt.

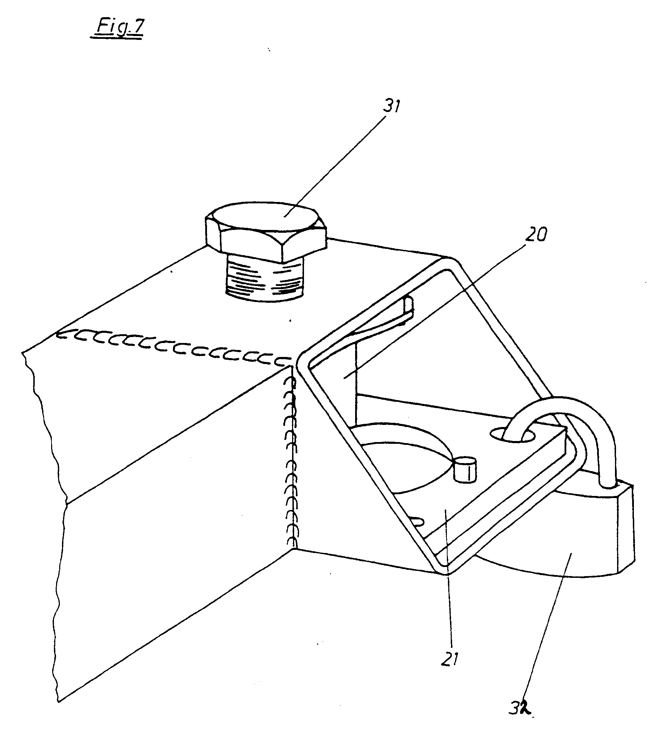

In der Fig. 7 ist die Kupplungseinrichtung gemäß Fig. 5 noch einmal perspektivisch schematisch dargestellt. In dieser Fig. 7 ist einmal angedeutet, daß der Schieber 21 in seiner verriegelnden Stellung durch ein Schloß 32 gesichert werden könnte, wodurch gleichzeitig eine Diebstahlsicherung des Fahrradträgers gegeben wäre.

Außerdem ist erkennbar, daß die Spannschraube 31 jederzeit in einfacher Weise frei zugänglich ist.

## Patentansprüche

1. Fahrradträger mit einer Kupplungseinrichtung zur Anordnung an einem Zughaken eines Kraftfahrzeuges, der einen in Richtung der Fahrzeuglängsachse verlaufenden Mittelträger und quer zu diesem, je nach Zahl der zu tragenden Fahrräder, paarweise beidseitig abragende, vorzugsweise längenveränderbare, querträgerbildende Querträgerarme, die jeweils eine Aufnahme für ein Rad des zu tragenden Fahrrades aufweisen, umfaßt, wobei der Mittelträger zwischen zwei Querträgern einen Führungsschacht für eine lotrecht aufragende, höhen- und/oder längenveränderbare Tragsäule aufweist, die Halterungsorgane für Pedalarme der auf den Querträgern getragenen Fahrräder aufweist, dadurch gekennzeichnet, daß der Mittelträger (10) im wesentlichen aus Blechen bzw. Platten gefertigt ist, von denen ein erstes Blech die Oberseite (23) und ein zweites Blech, zumindest im Bereich des Führungsschachts (11), einen Bodenbereich (25) des Mittelträgers (10) bildet, wobei die Oberseite (23) und der Bodenbereich (25) miteinander korrespondierende Öffnungen (27) zur Bildung des Führungsschachtes (11) für die Tragsäule (12) aufweisen, daß die Halterungsorgane der Tragsäule (12) in Fahrzeuglängsrichtung versetzt zueinander, beidseitig der Längsrichtung des Fahrzeuges an der Tragsäule (12) angeordnet und axialsymmetrisch zur Tragsäule ausgebildet sind, und daß ein Ende des Mittelträgers (10) einen Aufnahmebereich (19) für eine Kupplungseinrichtung aufweist, in der die kugelförmige Endverdickung (29) eines Zughakens (30) des Kraftfahrzeuges durch Verklemmung mittels Klemmorganen (20,21) und mit dem Mittelträger (10) zusammenwirkende Spannschraube (31) der Kupplungseinrichtung gesichert werden kann.

2. Fahrradträger nach Anspruch 1, dadurch gekennzeichnet, daß die Kupplungseinrichtung eine Klemmeinrichtung zur Verklemmung der Endverdickung (29), umfassend zwei in ihrem Abstand zueinander veränderbare Klemmorgane, zwischen denen die Endverdickung (29) mittels einer Spanneinrichtung verklemmbar ist, aufweist, wobei das untere Klemmorgan als die Endverdickung (29) untergreifendes Untergreiforgan und das obere Klemmorgan als Haube bzw. als Becher (20) ausgebildet ist, deren bzw. dessen Wandung wenigstens in einem Bereich zur Ausbildung einer etwa kreisförmigen Anlagelinie an der kugelförmige Endverdickung (29) bei der Verklemmung etwa konisch ausgebildet ist.

3. Fahrradträger nach Anspruch 2, dadurch gekennzeichnet, daß die Spanneinrichtung eine die Haube bzw. den Becher (20) bewegende Spannschraube (31) umfaßt.

4. Fahrradträger nach Anspruch 1 bis 3, dadurch gekennzeichnet, daß das Untergreiforgan zum Umgriff des Halsabschnittes des Zughakens (30) unterhalb der Endverdickung (29) gabelförmig ausgebildet ist.

5. Fahrradträger nach Anspruch 4, dadurch gekennzeichnet, daß das Untergreiforgan als Schieber (21) ausgebildet ist, der zum Umgriff des Hallsabschnittes des Zughakens (30) unterhalb der Endverdickung (29) eine Durchtrittsöffnung (22) aufweist, die schlüssellochförmig in eine Durchtrittsöffnung für die Endverdickung (29) erweitert ist.

6. Fahrradträger nach einem oder mehreren der vorhergehenden Ansprüche, dadurch gekennzeichnet, daß die Wandung des Bechers (20) bzw. der Haube unterhalb des konischen Wandabschnittes zylindrisch nach unten in Richtung auf den Schieber (21) verlängert ist.

7. Fahrradträger nach einem oder mehreren der vorhergehenden Ansprüche, dadurch gekennzeichnet, daß zur Begrenzung des Schiebeweges des Schiebers (21) aufragende Anschlagzapfen vorgesehen sind, die vorzugsweise bis in entsprechende Aufnahmen in der Außenwandung des nach unten verlängerten Zylinderabschnittes der Becherwandung bzw. Haubenwandung einschiebbar sind.

8. Fahrradträger nach einem oder mehreren der vorhergehenden Ansprüche, dadurch gekennzeichnet, daß der Schieber (21) in seiner den Halsabschnitt des Zughakens (30) umgreifenden bzw. verriegelnden Stellung mittels eines Schlosses (32) fixierbar ist.

9. Fahrradträger nach einem oder mehreren der vorhergehenden Ansprüche, dadurch gekennzeichnet, daß der Becher (20) bzw. die Haube innerhalb eines Gehäuses der Kupplungseinrichtung zentriert ist, vorzugsweise von einer Zentrierfeder zentral ausgerichtet gehalten ist.

10. Fahrradträger nach einem oder mehreren der vorhergehenden Ansprüche, dadurch gekennzeichnet, daß die Wandung des Bechers (20) bzw. der Haube, zumindest im konisch verlaufenden Wandbereich, nachgiebiger ist als die Endverdickung (29) im daran anliegenden Bereich.

11. Fahrradträger nach einem oder mehreren der vorhergehenden Ansprüche, dadurch gekennzeichnet, daß der Mittelträger (10) in einem seiner Endbereiche einen Aufnahmeraum (19) für die Kupplungseinrichtung aufweist und sich von diesem zu seinem anderen, freien Ende hin in der Draufsicht verjüngt.

12. Fahrradträger nach Anspruch 11, dadurch gekennzeichnet, daß der Mittelträger (10) in Draufsicht weitgehend trapezförmig ausgebildet ist.

13. Fahrradträger nach Anspruch 11 oder 12, dadurch gekennzeichnet, daß der Mittelträger (10) an seinem der Kupplungseinrichtung abgewandten Ende eine Anbringungsmöglichkeit für einen, vorzugsweise mit Leuchten bestückbaren Kennzeichenschildträger (17) aufweist.

14. Fahrradträger nach einem oder mehreren der vorhergehenden Ansprüche, dadurch gekennzeichnet, daß die Halterungsorgane der Tragsäule (12) in Fahrzeuglängsrichtung versetzt zueinander, beidseitig der Längsrichtung des Fahrzeuges an der Tragsäule (12) angeordnet und axialsymmetrisch zur Tragsäule (12) ausgebildet sind, indem zwei Klammerteile (9) in der von Wäscheklammern gewohnten Form, jeweils ein breiteres Klammerfunktionsende (13) und ein sich in Gegenrichtung dazu verjüngendes Schwanzende (14) aufweisend, derart miteinander verbunden sind, daß sie mit ihren Klammerinnenflächen flächig aneinander anliegen, und daß das Schwanzende (14) des einen Klammerteiles (9) jeweils dem Klammerfunktionsende (13) des anderen Klammerteiles (9) funktionell zugeordnet ist.

15. Fahrradträger nach Anspruch 14, dadurch gekennzeichnet, daß das Klammerfunktionsende (13) jedes Klammerteiles (9) etwa maulförmig zum teilweisen Umgriff des Pedalarmes (8) eines Fahrrades (2) ausgebildet ist.

16. Fahrradträger nach Anspruch 14 oder 15, dadurch gekennzeichnet, daß am Schwanzende (14) jedes Klammerteiles (9) eine Spanneinrichtung, vorzugsweise eine Spannschraube (16), angeordnet ist, die mit dem maulförmigen Klammerfunktionsende (13) des zugeordneten Klammerteiles (9) klemmend zusammenwirkt.

17. Fahrradträger nach Anspruch 14 bis 16, dadurch gekennzeichnet, daß jedes Klammerteil (9) als weitgehend hohles, jedoch vorzugweise stegverstärktes Gußteil ausgebildet ist.

18. Fahrradträger nach einem der vorhergehenden Ansprüche und Anspruch 17, dadurch gekennzeichnet, daß an jedem Klammerteil (9) ein Teil der Tragsäule (12) angeformt ist, die also im Bereich der Anlagefläche zweier einander zugeordneter Klammerteile (9) getrennt ist.

19. Fahrradträger nach einem der vorhergehenden Ansprüche, dadurch gekennzeichnet, daß die Klammerteile (9) aus Metall ausgebildet sind und im Bereich des Klammerfunktionsendes (13) mit einem weicheren Material, beispielsweise Kunststoff, pedalarmschonend kaschiert sind.

## Claims

1. Bicycle stand with a coupling adaptable to the tow hook of a motorised vehicle, comprising a central bearer, mounted in the direction of the longitudinal axis of the vehicle and a number of transversal beams, adapted to the number of bicycles to be transported, said beams being mounted in pairs on both sides of the central bearer, preferably adaptable in length and provided also with a hollow for a wheel of the bicycle to be carried, the central bearer being provided with a guidance sleeve placed between two transversal beams, for a perpendicular Support pillar, adaptable in height and/or in length and comprising attachment means for the pedals of the bicycles to be carried, characterized in that the central bearer (10) is made out of sheet metal e.g. plates, a first sheet forming the upper side (23) and a second sheet forming the bottom (25) of the central bearer (10), at least near the sleeve (11), the upper side (23) and the bottom (25) being provided with corresponding apertures (27) in order to form the guidance sleeve (11) for the support pilar (12), further in that the attachment means of the support pillar (12) are set off one against the other in the direction of the longitudinal axis of the vehicle mounted on both sides of the support pillar (12) in the longitudinal axis of the vehicle and mounted symmetrically in the axial direction in relation to the support pillar (12), further in that one end of the central bearer (10) has a zone (19) for the mounting of a coupling, in which coupling the spherical end (29) of a tow hook (30) of the towing vehicle can be wedged by means of wedging clamps (20, 21) while the coupling can be locked by a locking bolt (31) co-operating with the central bearer (10).

2. A bicycle stand according to claim 1, characterized in that the coupling system includes a wedging system for the spherical end thickness (29), comprising two wedging elements, adjustable in distance one against the other, the spherical end thickness (29) adapted to being wedged between said wedging elements by means of a locking system, the lower wedging element being formed as a lower locking element locking the lower side of the spherical end thickness (29), and the upper wedging element being formed as a cover e.g. a cup (20), the wall of said cover or cup being slightly spherically formed in order to obtain a circular contact line with the spherical end thickness (29).

3. Bicycle stand according to claim 2, characterized in that the locking system comprises a locking bolt (31) moving the cover e.g. the cup (20).

4. Bicycle stand according to claims 1 to 3, characterized in that the lower wedging element is formed as a fork below the spherical end thickness (29), in order to surround the narrow neck of the towing hook (30).

5. Bicycle stand according to claim 2, characterized in that the lower wedging element is built as a bolt (21), that, in order to surround the narrow neck of the tow hook (30), has a passage slit (22) under the spherical end thickness (29), that is enlarged in the form of a key entrance for the passage of the spherical end thickness (29).

6. Bicycle stand according to one or several of the previous claims, characterized in that the wall of the cover or cup (20) is cylindrically extended below the conical part of the wall towards the bolt (21).

7. Bicycle stand according to one or several of the previous claims, characterized in that in order to limit the movement of the bolt (21) protruding stops are provided, said stops preferably being adapted to be slid into corresponding seats in the outer face of the cylindrical part of the wall of the cover or cup extended downwards.

8. Bicycle stand according to one or several of the previous claims, characterized in that the bolt (21) can be locked by a lock (32) in the position where the bolt surrounds the narrow neck of the tow hook (30), e.g. locks said tow hook.

9. Bicycle stand according to one or several of the previous claims, characterized in that the cover (20), e.g. the cup is centered in the case of the coupling, e.g. that the cup is kept in a central position by a spring.

10. Bicycle stand according to one or several of the previous claims, characterized in that the wall of the cover (20) e.g. the cup is more flexible than the spherical end thickness (29), in the contact zone, at least in the conical part of the wall.

11. Bicycle stand according to one or several of the previous claims, characterized in that the central bearer (10) has at one end a housing (19) for the coupling and that the central bearer (10) narrows in plan view from that end towards the free end.

12. Bicycle stand according to claim 11, characterized in that the central bearer (10), in plan view is mostly built as a trapezium.

13. Bicycle stand according to claim 11 or 12, characterized in that the central bearer (10) is provided on the end opposite the coupling with the possibility to connect a support (17) for a registration plate, that can also be provided with rear lights.

14. A bicycle stand according to one or several previous claims characterized in that the attachment means of the support pillar (12) are set off one against the other in the direction of the longitudinal axis of the vehicle, mounted on both sides of the support pillar (12) in the longitudinal axis of the vehicle and mounted symmetrically in the axial direction in relation to the support pillar (12) in that two pincers (9), having the general shape of clothes-pegs, on one side a larger pincer part (13) and on the other side a narrowing tail part (34), are coupled together in such a way that they touch each other with their inner surfaces along a plane, and that the tail end (14) of one pincer part (9) always presents a functional position in relation to the functional tail end (13) of the other pincer part (9).

15. A bicycle stand according to claim 14 characterized in that the functional tail part (13) of each pincer part (9) is jaw shaped to partially grip the pedal rod (8) of the bicycle (2).

16. Bicycle stand according to claims 14 or 15, characterized in that on each tail end (14) of each pincer part (9) a clamping device is provided, e.g. a clamping screw (16), that co-operates with the jaw-shaped functional tail part (13) of the other opposite pincer part (9) to effect a clamping action.

17. A bicycle stand according to claims 14 to 16, characterized in that each pincer part (9) is made as a mostly hollow cast part that is however reinforced by cross bars.

18. A bicycle stand according to one of the previous claims and claim 17, characterized in that a part of the support pillar (12) is joined to each pincer part (9) and that said part is split near two pincer parts (9) that co-operate.

19. A bicycle stand according to one of the previous claims, characterized in that the pincer parts (9) are made of metal and that said parts are covered near the functional ends with softer material, e.g. plastic material, in order to protect the pedal levers.

## Revendications

1. Support de bicyclette pourvu d'un attelage permettant l'accouplement à un dispositif de remorquage d'un véhicule à moteur, possédant une poutre centrale, s'étendant dans le sens de l'axe longitudinal du véhicule, et des bras de support transversaux, dont le nombre correspond au nombre des bicyclettes à transporter, s'étendant par paires de chaque côté de la poutre centrale, pouvant de préférence être réglé en longueur, et pourvu d'un creux pour recevoir la roue de la bicyclette, la poutre centrale étant pourvue entre deux supports transversaux d'un guide pour un poteau perpendiculaire réglable en hauteur et/ou en longueur et pourvu d'élements de fixation pour les leviers de pédale de la bicyclette à transporter sur les bras de support, caractérisé en ce que la poutre centrale (10) est principalement faite de tôles, par exemple de tôles plates, desquelles une première tôle forme la partie supérieure (23) et une deuxième constitue au moins dans la zone du guide (11) le fond (25) de la poutre centrale (10) la partie supérieure (23) et le fond (25) comportant des ouvertures (27) correspondants formant le guide (11) pour le poteau (12), en ce que les éléments de fixation montés sur le poteau (12) sont décalés l'un vis-à-vis de l'autre dans le sens de l'axe longitudinal du véhicule des deux côtés de cet axe et de façon axialement symmétrique par rapport au poteau (12), en ce qu'une extrémité de la poutre centrale (10) présente une zone de réception (19) pour un attelage, dans lequel la boule (29) de remorquage d'un crochet (30) du véhicule à moteur peut être calée par des organes (20, 21) de serrage et bloquée par un boulon de serrage (31) solidaire de la poutre centrale (10).

2. Support de bicyclette selon la revendication 1, caractérisé en ce que l'attelage est pourvu d'un dispositif de serrage permettant de caler l'extrémité (29) en forme de boule, comprenant deux organes de serrage, dont l'écartement peut varier et entre lesquels la boule (29) peut être calée Bu moyen d'un dispositif de serrage, l'organe de serrage inférieur étant formé comme un organe de préhension inférieur prenant la boule (29) par en dessous et l'organe de serrage supérieur étant formé comme une chape, par exemple une coupe, dont la paroi présente au moins dans une zone une forme quelque peu conique afin de former une ligne de contact circulaire avec la boule (29).

3. Support de bicyclette selon la revendication 2, caractérisé en ce que le dispositif de serrage comprend un boulon (31) de serrage qui déplace la chape, par exemple, la coupe (20).

4. Support de bicyclette selon les revendications 1 à 3, caractérisé en ce que l'organe de préhension inférieur présente sous la boule (29) une forme de fourche permettant d'entourer la partie amincie du crochet (30) de remorquage.

5. Support pour bicyclette selon la revendication 4, caractérisé en ce que l'organe de préhension inférieur a la forme d'un verrou (21), pourvu sous la boule (29) d'un passage (22) élargi comme un trou de serrure pour le passage de la boule (29) afin d'entourer la partie amincie du crochet (30) de remorquage.

6. Support pour bicyclette selon une ou plusieurs revendications antérieures, caractérisé en ce que la paroi de la chape, par exemple de la coupe, est prolongée cylindriquement en dessous de la partie de paroi conique vers le bas en direction du verrou (21).

7. Support pour bicyclette selon une ou plusieurs revendications antérieures, caractérisé en ce que sont prévues plusieurs butées permettant de limiter le mouvement du verrou (21), entrant de préférence dans des cavités correspondantes dans la face extérieure de la partie de paroi cylindrique prolongée vers le bas de la chape, par exemple, de la coupe.

8. Support de bicyclette selon une ou plusieurs revendications antérieures, caractérisé en ce que le verrou (21) peut être verrouillé dans la position où il entoure la partie amincie du crochet (30) de remorquage par un cadenas (32).

9. Support de bicyclette selon une ou plusieurs revendications antérieures, caractérisé en ce que la chape (20), par exemple la coupe, est centrée dans le boîtier de l'attelage, de préférence placée centralement par un ressort de centrage.

10. Support de bicyclette selon une ou plusieurs revendications antérieures, caractérisé en ce que la paroi de la chape (20), par exemple de la coupe, est plus élastique que la boule (29) dans la zone de contact au moins dans sa partie conique.

11. Support pour bicyclette selon une ou plusieurs des revendications antérieures caractérisé en ce que la poutre centrale (10) présente à une extrémité un logement (19) pour l'attelage et que vue d'en haut, la poutre (10) devient plus étroite s'étendant à partir de ce logement vers l'autre extrémité.

12. Support pour biyclette selon la revendication 11, caractérisé en ce que vue d'en haut la poutre centrale (10) est formée principalement de façon trapézoïdale.

13. Support pour bicyclette selon la revendication 11 ou 12 caractérisé en ce que la poutre centrale (10) présente à l'extrémité opposée à l'attelage une possibilité de montage d'une barre portant la plaque d'immatriculation et pouvant être pourvue de feux de signalisation.

14. Support pour bicyclette selon une ou plusieurs des revendications antérieures caractérisé en ce que les éléments de fixation montés sur le poteau (12) sont décalés l'un vis-à-vis de l'autre dans le sens de l'axe longitudinal du véhicule des deux côtés de cet axe et de façon axialement symmétrique par rapport au poteau (12), et en ce que deux parties (9) de pince, ayant la forme connue de pinces à linge, possédent chacun une extrémité (13) élargie servant de pince, et une extrémité (14) opposée amincie, sont réliées de telle façon que les faces intérieures des pinces se touchent selon un plan et que l'extrémité amincie (14) d'une partie (9) de pince est en relation fonctionelle avec la partie (13) élargie servant de pince de l'autre partie (9) de pince.

15. Support de bicyclette selon la revendication 14, caractérisé en ce que l'extrémité (13) élargie, servant de pince, de chaque partie (9) de la pince, a une forme de machoire permettant d'agriper partiellement le levier (8) de pédale d'une bicyclette.

16. Support de bicyclette selon la revendication 14 ou 15, caractérisé en ce que l'extrémité (14) amincie de chaque partie de pince (9) est pourvue d'un organe de bloquage, de préférence un boulon (16) de serrage, qui coopère avec l'extrémité (13) en forme de machoire de la partie (9) de pince opposée afin d'assurer le serrage.

17. Support pour bicyclette selon les revendications 14 à 16, caractérisé en ce que chaque partie de pince (9) est formée comme une pièce de fonte principalement creuse, mais de préférence pourvue d'entretoises.

18. Support pour bicyclette selon une des revendications antérieures et revendication 17, caractérisé en ce qu' une partie du poteau (12) forme part d'une partie de pince (9), ledit poteau (12) étant ainsi séparé en deux dans la zone de deux parties de pince (9) associées.

19. Support de bicyclette selon une des revendications antérieures, caractérisé en ce que les parties de pince (9) sont faites en métal et que les extrémités (13) fonctionnant comme pince sont recouvert d'un matériau doux, par exemple, du plastique afin de ne pas abîmer les leviers de pédales.
